# EUROPÄISCHE PATENTANMELDUNG

(11) **EP 2 708 781 A2**
(43) Veröffentlichungstag der Anmeldung: **19.03.2014**
(21) Anmeldenummer: 13184355.9
(22) Anmeldetag: 13.09.2013
(51) Int. Cl.: F16K 3/02

(54) **Fluidtechnisches Flachschieberventil**

(30) Priorität: 17.09.2012 DE 102012108711
(71) Anmelder: Samson AG, 60314 Frankfurt (DE)
(72) Erfinder: Kiesbauer, Jörg, 64859 Eppertshausen (DE); Valentin-Rumpel, Frank, 64823 Groß-Umstadt (DE); Burghardt, Helmut, 95173 Schönwald (DE); Albert, Heinz, 07629 Schleifreisen (DE)
(74) Vertreter: Borchert, Uwe Rudolf

(57) **Zusammenfassung**

Die Erfindung betrifft ein fluidtechnisches Flachschieberventil (10) in Schichtbauweise mit wenigstens einem Eingangsanschluss (16), einem Ausgangsanschluss (16), einer Deckelplatte (12) und einer Bodenplatte (14), wobei zwischen Deckelplatte (12) und Bodenplatte (14) ein Schieberelement (26), durch welches die Fluidwege und Durchflusseigenschaften vorgesehen ist beeinflussbar sind und durch die Stellung des Schieberelements (26) gegenüber der Deckel- und Bodenplatte (12, 14) eingestellt werden. Die Erfindung zeichnet sich dadurch aus, dass zwischen Deckelplatte (12) und Bodenplatte (14) wenigstens ein Distanzstück (20) vorgesehen ist, wodurch ein Abstand von Deckelplatte (12) zu Bodenplatte (14) eingestellt ist, der um einen Spalt mit einem definierten Spaltmaß größer ist als die Stärke des Schieberelements (26), wobei eine Abdichtung des Flachschieberventils (10) lediglich durch den eingestellten Spalt erfolgt.

## Beschreibung

Die Erfindung betrifft ein fluidtechnisches Flachschieberventil gemäß dem Oberbegriff des Anspruches 1, sowie Verfahren zur Herstellung gemäß Anspruch 7 und Anspruch 9.

Gemäß der EP 0 102 443 sind Flachschieberventile bekannt die eine Deckel- und eine Bodenplatte umfassen zwischen welchen ein Schieberelement beweglich geführt ist. Durch Veränderung der Schieberstellung gegenüber der Deckel- und Bodenplatte ändert sich die Durchflusseigenschaft des Schieberventils. Somit können Drosselfunktionen oder Wegeeinstellungen vorgenommen werden. Gemäß der Druckschrift ist zwischen einem Druckmitteleingang an der Grundplatte und dem Ventil eine Dichtelementplatte vorgesehen, welche aufgrund der Flächenpressung zwischen den Flächen des Dichtelements und der Grundplatte zu Druckerhöhung führt und dabei die Dichtwirkung erhöht. Insgesamt erfolgt die Abdichtung des Ventils im Wesentlichen durch weichdichtende Dichtlösungen. Die DE 2 137 882 offenbart ein Flachschieberventil, das ein Schieberelement zwischen Deckel und Bodenplatte beweglich lagert, wobei Deckel und Bodenplatte über ein Distanzstück verbunden sind, das allseitig mit einer Gummischicht versehen ist. Die Gummischicht, soll vorgespannt sein, um einen Wulst in Richtung des Schieberelements einzustellen, wobei an dem spindelseitigen Ende des Schieberelements eine Dichtung vorgesehen ist. Die Dichtung um das Schieberelement führt zu Reibung des Schieberelements mit der Dichtung. Ein gattungsgemäßes Flachschieberventil ist auch der FR 1313971 zu entnehmen.

Bei weichdichtenden Schieberventilen kommt es aufgrund der verwendeten Elastomerdichtungen - "Weichdichtungen" - zu hohen Reibungswerten, die in einem hohen Kraftaufwand bei der Verstellung führen und konstruktionsbedingt zu Totzeiten durch den Wechsel zwischen den Dichtungen der einzelnen Steuerkanten.

Alternativ umfasst ein flaches Schieberventil eine Boden- und eine Deckelplatte die ein zwischen ihnen liegendes Schieberelement mit Normalkraft beaufschlagen. Dadurch wird die Dichtigkeit zwischen den Platten durch Pressung realisiert.

Durch diese auf das Schieberelement wirkende Normalkraft kommt es zu hohen Reibungskräften die um ein vielfaches höher liegen als die Reibungskräfte rotationssymmetrischer Schiebeventile.

Durch die Kraftdichtung muss viel Leistung zur Umstellung des Schieberelements verwendet werden. In bekannter Weise umfasst ein Flachschieberventil ein fluidtechnisches Schieberventil in Schichtbauweise mit wenigstens einem Eingangsanschluss, einem Ausgangsanschluss, einer Deckelplatte und einer Bodenplatte. Zwischen Deckelplatte und Bodenplatte ist ein Schieberelement vorgesehen, durch welches die Fluidwege und Durchflusseigenschaften beeinflussbar sind. Fluidwege und Durchflusseigenschaften werden über die Schieberstellung gegenüber der Deckel- und Bodenplatte eingestellt. Insbesondere betrifft die Erfindung ein Mehrwegeventil.

Es ist Aufgabe der Erfindung, eine leistungsarme Regelung des Flachschieberventils zu ermöglichen. Ferner soll erreicht werden, dass ein schneller Wechsel der Steuerkanten möglich ist um keine Totzeit zu erzeugen.

Die Erfindung zeichnet sich dadurch aus, dass zwischen der Deckel- und der Bodenplatte des Flachschieberventils wenigstens ein Distanzstück vorgesehen ist, welches Deckel- und Bodenplatte derart beabstandet, dass der Abstand um einen Spalt mit einem definierten Spaltmaß größer ist als die Stärke des Schieberelements welches zwischen Deckel- und Bodenplatte bewegbar ist. Ferner ist eine Abdichtung des Schieberventils lediglich durch den eingestellten Spalt abgedichtet.

Durch die Erfindung wird ein schnelles Schaltverhalten bei niedrigem Leistungsaufwand für den Schaltvorgang gewährleistet.

Um bei einer Spaltdichtung einen Massenverlust des eingesetzten Fluids möglichst gering zu halten, muss der Spalt möglichst klein sein. Um dennoch ein weitgehend reibungsfreies Gleiten zu ermöglichen, liegen die Spaltmaße vorzugsweise im µm Bereich insbesondere zwischen 0,5 und 4,0 µm.

Zur Steuerung des Fluidstroms können in das Schieberelement Fluidkanäle eingebracht sein, welche die eigentliche Wegventilfunktion und eine Verbindung zur Deckel- und/oder Bodenplatte, in welche die Fluidanschlüsse vorzugsweise eingebracht sind, bereitstellen.

In einer weiteren vorteilhaften Ausführungsform der Erfindung weisen die Distanzstücke einen Grundkörper und eine Beschichtung auf. Der Grundkörper kann erfindungsgemäß dieselbe Dicke aufweisen wie das Schieberelement. Um den Spalt mit einem definierten Spaltmaß einzustellen ist vorzugsweise zwischen der Deckel- und/oder Bodenplatte und dem Grundkörper des Distanzstücks eine dünne Schicht vorgesehen. Insbesondere ist der Grundkörper auf einer der Deckel- oder Bodenplatte zugewandten Fläche mit einer Beschichtung versehen.

Auf diese Weise kann einfach eine Spaltbreite im µm Bereich eingestellt werden. Dies lässt sich insbesondere durch die Anwendung herkömmlicher Schichtverfahren wie Sputtern oder Siebdruck oder ähnlichem erreichen. Entsprechend sind Dünn- oder Dickschichten auf den Distanzstücken aufgebracht.

In einer alternativen Ausführungsform können die zur Erreichung der Schicht notwendigen Partikel auch in einer Emulsion auf die betreffende Fläche aufgebracht werden.

In einer besonders vorteilhaften Ausführungsform der Erfindung sind insbesondere die Deckelplatte, Bodenplatte und wenigstens das Schieberelement sowie die Grundkörper der Distanzstücke aus Keramik hergestellt. Dies stellt eine besonders günstige Ausführung eines Flachschieberventils dar.

Weiter betrifft die Erfindung ein Verfahren zu Herstellung eines vorangehend beschriebenen Flachschieberventils, wobei eine Deckelplatte und eine Bodenplatte über wenigstens ein Distanzstück, das einen Grundkörper mit einer Beschichtung umfasst, verbunden ist. Erfindungsgemäß wird ein Schieberelement hergestellt, das die gleiche Dicke bzw. Stärke aufweist wie der Grundkörper der Distanzstücke. Die Grundkörper der Distanzstücke werden an wenigstens einer der Deckel- oder Bodenplatte zugewandten Fläche beschichtet. Anschließend werden die Deckelplatte und die Bodenplatte mit dem Distanzstück verbunden. Das Schieberelement wird in den dadurch entstehenden Hohlraum eingesetzt.

In einer besonders vorteilhaften Ausgestaltung werden das Schieberelement und der Grundkörper der Distanzstücke aus demselben plattenförmigen Rohkörper ausgeschnitten. Dieses Vorgehen ist besonders bei der Verwendung von Keramiken vorteilhaft, da die zur Herstellung der Keramiken verwendeten Sinterprozesse eine Schrumpfung des Materials beinhaltet. Dies garantiert, dass eine gleiche Dicke von Grundkörper des Distanzstücks und Schieberelement vorliegt. So hat ausschließlich die Beschichtung einen Einfluss auf die Ausmaße des Dichtungsspalts. Besonders mit bewährten Beschichtungsverfahren wie Aufdampfen, Sputtern, Siebdruck oder ähnlichem können die aufzutragenden Schichten äußerst genau eingestellt werden. Daher ist es möglich, ein Spaltmaß zwischen Schieberelement und Deckelplatten einzustellen, welches eine Abdichtung des Schieberventils ermöglicht und trotzdem eine annähernd reibungsfreie Verfahrbarkeit des Schieberelements gewährleistet. So kann die Beschichtung eine durch Dünn- oder Dickschichtverfahren hergestellte Schicht sein. Alternativ kann auch eine Emulsion oder auch sehr dünne Folien wie beispielsweise Blattgold zwischen dem Grundkörper des Distanzstücks und den äußeren Deckelplatten eingebracht werden.

In einer weiteren bevorzugten Ausführungsform kann ein Verfahren zur Herstellung des Flachschieberventils Anwendung finden, gemäß welchem das Schieberelement und die Distanzstücke aus demselben Rohkörper gleichmäßiger Dicke getrennt werden. Zur Einstellung des definierten Spaltmaßes wird das Schieberelement an seiner der Deckel- oder Bodenplatte zugewandten Fläche um das Spaltmaß abgenommen, insbesondere abgeschliffen.

Indem das Schieberelement und die Distanzstücke aus demselben Rohkörper gleichmäßiger Dicke getrennt werden, können die Toleranzen sehr gering gehalten werden, was für den Dichteffekt eines geringen Spalts wesentlich ist.

Insbesondere die Verwendung eines Keramikwerkstoffs als Rohkörper gleichmäßiger Dicke ist wie bereits erwähnt besonders günstig, da zum einen die Toleranzen in der Dicke des Rohkörpers gering gehalten werden können, zum anderen ist ein Abschleifen des Schieberelements sehr genau möglich.

Der Schleifvorgang kann erfindungsgemäß vor dem Trennvorgang oder an diesen anschließend erfolgen.

Im Weiteren können die, das Schieberelement umschließenden Deckel- und Bodenplatten ein durch Bondverfahren oder lediglich durch eine Kraftbeaufschlagung mit dem Distanzstück verbunden werden. Ein vorbeschriebenes Flachschieberventil kann vorteilhaft in der Prozesstechnik eingesetzt werden. Insbesondere bietet sich das Flachschieberventil als Magnetventil an. Durch die geringe Leistungsaufnahme beim Schaltvorgang und durch die Ermöglichung des schnellen Schaltvorgangs, können die Vorteile des magnetischen Antriebs des Schieberelements voll ausgenutzt werden.

Vorzugsweise kann ein erfindungsgemäßes Flachschieberventil in einem Stellungsregler eingesetzt werden. Durch die geringen Totzeiten kann so eine ausgezeichnete Regelung eines Antriebs gewährleistet werden.

Das erfindungsgemäße Flachschieberventil eignet sich auch für weitere Anwendungen der Prozesstechnik, wie beispielsweise als Schnellentlüfter oder in Verbindung mit anderen Anbaugeräten.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
Fig. 1 eine schematische Schnittansicht eines Schieberventils, und
Fig. 2 ein schematisches Zwischenergebnis eines Verfahrens zur Herstellung eines Flachschieberventils.

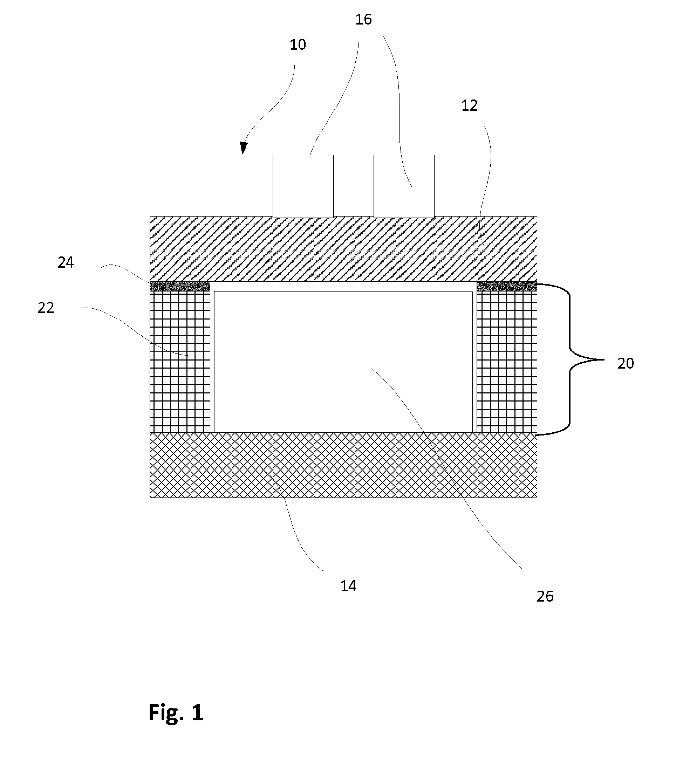

Fig. 1 zeigt eine schematische Schnittansicht eines Schieberventils 10, wobei das Flachschieberventil 10 zwei äußere Deckplatten, eine Deckelplatte 12 und eine Bodenplatte 14 umfasst. In die Deckelplatte 12 sind zwei fluidische Anschlüsse 16 eingebracht.

Die Deckelplatte 12 und die Bodenplatte 14 sind über zwei seitlich angeordneten Distanzstücke 20 miteinander verbunden. Die Distanzstücke 20 umfassen je einen Grundkörper 22 auf dem eine Beschichtung 24 aufgetragen ist.

In den so entstandenen Hohlraum ist ein Schieberelement 26 eingesetzt welches zwischen Deckelplatte 12 und Bodenplatte 14 verschieblich aufgenommen ist.

Das Schieberelement 26 weist dieselbe Dicke auf wie der Grundkörper 22 des Distanzstücks 20. In das Schieberelement sind Kanäle eingebracht, die mit den fluidischen Anschlüssen 16 kommunizieren.

Durch die Beschichtung 24 des Distanzstücks 20 ist ein Spaltmaß im µm Bereich eingestellt. Dieses Spaltmaß ist so gewählt, dass es fluidische Dichteigenschaften aufweist und dennoch sich das Schieberelement 26 reibungsarm verfahren lässt.

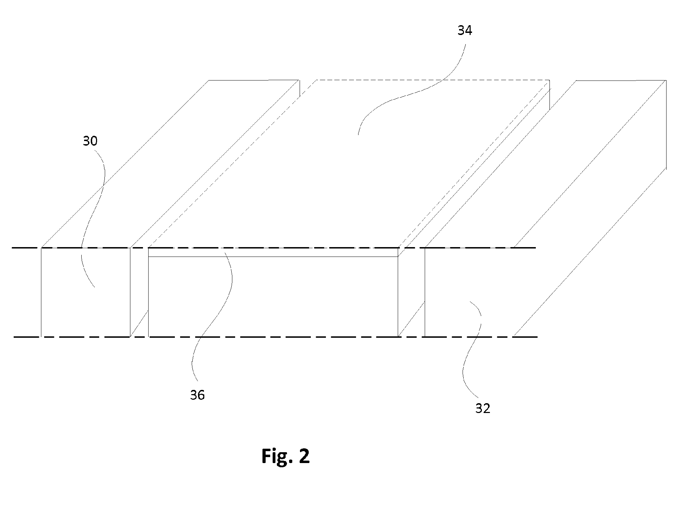

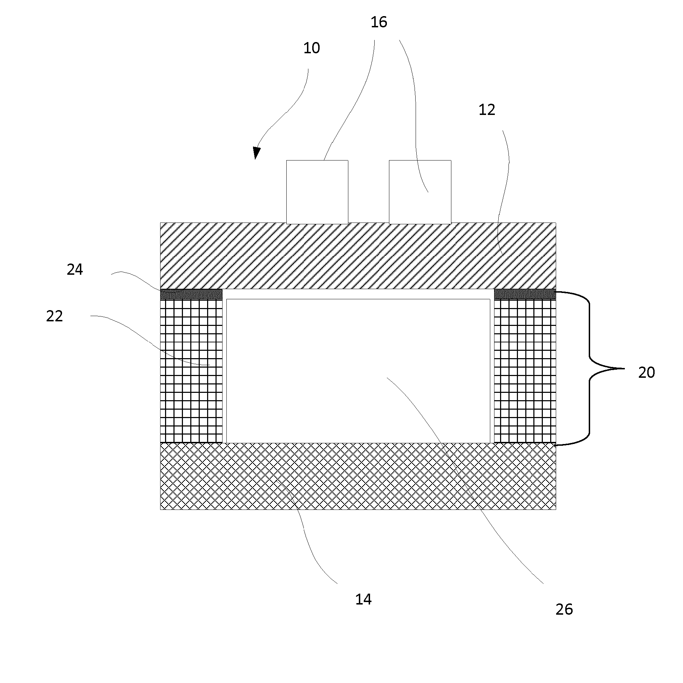

Fig. 2 zeigt ein Zwischenergebnis eines erfindungsgemäßen Verfahrens zur Herstellung eines Flachschieberventils. Aus einem gemeinsamen plattenförmigen Rohkörper gleichmäßige Dicke wurden die Distanzstücke 30, 32 und das Schieberelement 34 getrennt.

Um ein Spaltmaß zwischen den Distanzstücken 30 und 32 und dem Schieberelement 34 einzustellen, wurde der Ventilkörper, wie dargestellt, um den gestrichelten Bereich 36 abgeschliffen. Dadurch kann eine weitgehend reibungsfreie Verschiebung des Ventilkörpers gegenüber der Deckel- und Bodenplatte vorgenommen werden, wodurch dennoch über den Spalt mit einem geringen definierten Spaltmaß eine ausreichende Abdichtung hervorgeht.

Wie zuvor beschrieben, werden in einem weiteren Verfahrensschritt eine Deckel- und eine Bodenplatte über die Distanzstücke verbunden und das Schieberelement 34 verschiebbar dazwischen gelagert.

### Bezugszeichenliste

- 10: Schieberventil
- 12: Deckelplatte
- 14: Bodenplatte
- 16: fluidische Anschlüsse
- 20: Distanzstück
- 22: Grundkörper
- 24: Beschichtung
- 26: Schieberelement
- 30: Distanzstück
- 32: Distanzstück
- 34: Schieberelement
- 36: gestrichelter Bereich

## Patentansprüche

1. Fluidtechnisches Flachschieberventil (10) in Schichtbauweise mit wenigstens einem Eingangsanschluss (16), einem Ausgangsanschluss (16), einer Deckelplatte (12) und einer Bodenplatte (14), wobei zwischen Deckelplatte (12) und Bodenplatte (14) ein Schieberelement (26), durch welches die Fluidwege und Durchflusseigenschaften vorgesehen ist beeinflussbar sind und durch die Stellung des Schieberelements (26) gegenüber der Deckel- und Bodenplatte (12, 14) eingestellt werden, **dadurch gekennzeichnet, dass** zwischen Deckelplatte (12) und Bodenplatte (14) wenigstens ein Distanzstück (20) vorgesehen ist, wodurch ein Abstand von Deckelplatte (12) zu Bodenplatte (14) eingestellt ist, der um einen Spalt mit einem definierten Spaltmaß größer ist als die Stärke des Schieberelements (26), wobei eine Abdichtung des Flachschieberventils (10) lediglich durch den eingestellten Spalt erfolgt.

2. Fluidtechnisches Flachschieberventil (10) nach Anspruch 1, **dadurch gekennzeichnet, dass** das Spaltmaß zwischen 0,5 Mikrometer und 4,0 Mikrometer liegt.

3. Fluidtechnisches Flachschieberventil (10) nach Anspruch 1 oder 2, **dadurch gekennzeichnet, dass** das Schieberelement (26) aus Keramik hergestellt ist.

4. Fluidtechnisches Flachschieberventil (10) nach einem der vorangehenden Ansprüche 1 bis 3, **dadurch gekennzeichnet, dass** ein Distanzstück (20) einen Grundkörper (22) und eine Beschichtung (24) aufweist, die auf der dem Deckel- und/oder der Bodenplatte (12, 14) zugewandten Fläche des Grundkörpers (22) aufgebracht ist, wobei das Schieberelement (26) dieselbe Dicke aufweist wie der Grundkörper (22) des Distanzstücks (20).

5. Fluidtechnisches Flachschieberventil (10) nach Anspruch 4, **dadurch gekennzeichnet, dass** die Beschichtung (24) eine durch Dünnschicht oder Dickschichtverfahrens hergestellte Schicht ist.

6. Verwendung eines fluidtechnischen Flachschieberventil (10) nach einem der vorangehenden Ansprüche, in einem Stellungsregler, als Magnetventil oder als Schnellentlüfter.

7. Verfahren zur Herstellung eines Flachschieberventils (10), wobei eine Deckelplatte (12) und eine Bodenplatte (14) über wenigstens ein Distanzstück (20), umfassend einen Grundkörper (22) und eine Beschichtung (24), verbunden werden und ein Schieberelement (26) beweglich zwischen Deckelplatte (12) und Bodenplatte (14) eingebracht wird, wobei Schieberelement (26) und der Grundkörper (22) des Distanzstücks (20) in gleicher Dicke hergestellt werden und das Distanzstück (20) an einer der Deckelplatte (12) und/oder der Bodenplatte (14) zugewandten Fläche beschichtet wird, wobei die auf den Grundkörper (22) aufgebrachte Schichtdicke der Beschichtung (24) einem einzustellenden Spaltmaß entspricht, welches sich aus der Differenz des Abstands von Deckelplatte (12) zu Bodenplatte (14) und der Dicke des Schieberelements (26) ergibt.

8. Verfahren nach Anspruch 7, **dadurch gekennzeichnet, dass** das Schieberelement (26) und der Grundkörper (22) des Distanzstücks (20) aus demselben plattenförmigen Rohkörper ausgeschnitten werden.

9. Verfahren nach Anspruch 7 oder 8, **dadurch gekennzeichnet, dass** die Beschichtung (24) durch ein Dünnschichtverfahren erzeugt wird.

10. Verfahren nach Anspruch 7 oder 8, **dadurch gekennzeichnet, dass** die Beschichtung (24) durch ein Dickschichtverfahren erzeugt wird.

11. Verfahren nach Anspruch 7 oder 8, **dadurch gekennzeichnet, dass** die, die Beschichtung (24) bildenden Partikel mittels einer flüssigen Emulsion aufgebracht werden.

12. Verfahren zur Herstellung eines Flachschieberventils (10), wobei eine Deckelplatte (12) und eine Bodenplatte (14) über wenigstens ein Distanzstück (20), umfassend einen Grundkörper (22) verbunden werden und ein Schieberelement (26) beweglich zwischen Deckelplatte (12) und Bodenplatte (14) eingebracht wird, wobei das Schieberelement (26) und der Grundkörper (22) des Distanzstücks (20) aus demselben plattenförmigen Rohkörper getrennt werden, wobei vom Schieberelement (26) eine Schicht abgenommen wird, wobei die abgenommene Schicht einem einzustellenden Spaltmaß entspricht, welches sich aus der gewünschten Differenz des Abstands von Deckelplatte (12) zu Bodenplatte (14) und der Dicke des Schieberelements (26) ergibt.

13. Verfahren nach Anspruch 12, **dadurch gekennzeichnet, dass** das Abnehmen der Schicht vom Schieberelement (26) durch abschleifen erfolgt.

14. Verfahren nach einem der vorangehenden Ansprüche 12 oder 13, **dadurch gekennzeichnet, dass** die Schicht nach der Trennung des Schieberelements (26)vom plattenförmigen Rohkörper vom Schieberelement (26) abgenommen wird.

15. Verfahren nach einem der vorangehenden Ansprüche 12 oder 13, **dadurch gekennzeichnet, dass** die Schicht vor der Trennung des Schieberelements (26) vom plattenförmigen Rohkörper vom Schieberelement (26) abgenommen wird.
